Europäisches Patentamt

European Patent Office

Office européen des brevets

(19)

(11) Publication number: **0 484 964 A1**

## EUROPEAN PATENT APPLICATION

(21) Application number: **91119063.5**

(22) Date of filing: **08.11.91**

(51) Int. Cl.5: **H01M 4/38**

(30) Priority: **09.11.90 JP 305838/90**

(43) Date of publication of application:
**13.05.92 Bulletin 92/20**

(84) Designated Contracting States:
**DE FR GB SE**

(71) Applicant: **FURUKAWA DENCHI KABUSHIKI KAISHA**
**4-1, Hoshikawa 2-chome, Hodogaya-ku**
**Yokohama-shi, Kanagawa-ken(JP)**

(72) Inventor: **Wakao, Shinjiro**
**5-8-101, Takamori**
**Isehara-shi, Kanagawa-ken(JP)**

(74) Representative: **Schmidt-Evers, Jürgen,**
**Dipl.-Ing. et al**
**Patentanwälte Mitscherlich & Partner,**
**Steinsdorfstrasse 10**
**W-8000 München 22(DE)**

(54) **Hydrogen-occlusion alloy electrode.**

(57) It consists of a hydrogen-occlusion alloy whose composition is expressed by a general formula of
$Zr_{1-a}Ti_a(V_{0.33+x}Ni_{0.67-x-b}A_b)_{2+c}$, wherein A represents at least one kind of element selected from among Fe, Co and Mn,
$0 \leq a \leq 0.7$,
$-0.05 < X < 0.07$,
$0 < b \leq 0.4$, and
$0 \leq c \leq 1$.
By using the hydrogen-occlusion alloy electrode as above or a hydride thereof as a negative electrode in a battery, it provides a higher capacity.

EP 0 484 964 A1

This invention relates to a hydrogen-occlusion alloy electrode which is capable of electrochemically occluding and releasing hydrogen and used as a negative electrode in a secondary cell or battery.

Secondary cells or batteries well known heretofore include a nickel-cadmium battery, a lead acid battery and the like. However, they have a common drawback that the energy density per unit weight or unit volume is comparatively low. For this reason, there has been proposed a nickel-hydrogen cell or battery in which the negative electrode is an electrode made of a hydrogen-occlusion alloy capable of electrochemically occluding and releasing a large quantity of hydrogen, the positive electrode is made of a nickel oxide, and the electrolyte is an alkaline aqueous solution, thus giving a higher energy density. In the above cell, the negative electrode is made of such a hydrogen-occlusion alloy as $LaNi_5$. However, in the case of the above-mentioned hydrogen-occlusion alloy, it is difficult for it to electrochemically occlude hydrogen sufficiently under the atmospheric pressure because its hydrogen dissociation pressure at the room temperature is more than$\approx$ 2 bar (2 atms.), thus making it rather an impractical one.

To solve this problem, the inventor of the present invention previously proposed, as disclosed in the published unexamined Japanese patent application Tokkai-Hei No. 2-220355, an electrode made of a hydrogen-occlusion alloy of Ti-Zr-V-Ni system having Laves phase and has made it known of his discovery that, with an alloy of this system, it is possible to obtain the discharge capacity of up to 1123 c/g (312 mAh/g) at the maximum.

Notwithstanding, there is continuously a strong demand for further improvement of a secondary cell or battery in terms of higher discharge capacity and it is therefore much desired that a hydrogen-occlusion alloy electrode with a further increased capacity be made available.

The object of the present invention is to provide a new hydrogen-occlusion alloy electrode which is capable of occluding hydrogen sufficiently under the atmospheric pressure and giving a larger discharge capacity than its conventional counterpart, said electrode being characterized in that it consists of: a hydrogen-occlusion alloy whose composition is expressed by a general formula of $Zr_{1-a}$ $Ti_a$ $(V_{0.33+x} Ni_{0.67-x-b} A_b)_{2+c}$, wherein A represents at least one kind of element selected from among Fe, Co and Mn, $0 \leq a \leq 0.7$, $-0.05 < X < 0.07$, $0 < b \leq 0.4$, and $0 \leq c \leq 1$; or a hydride of said alloy.

Embodying examples of the present invention are described in detail below. Powdered zirconium (Zr), titanium (Ti), vanadium (V) and nickel (Ni), plus at least powdered one of cobalt (Co), manganese (Mn) and iron (Fe), were weighed and mixed for a predetermined composition ratio which will be 3 : 2 : 4 for Zr : V : Ni when obtaining the alloy of Zr $(V_{0.33} Ni_{0.67})_2$, that is, of $Zr_3 V_2 Ni_4$, for example. This mixture was heated and molten by means of an arc melting process so as to obtain a hydrogen-occlusion alloy. This alloy was then pulverized into coarse grains and heated at 900°C in a vacuum heating device. After introducing hydrogen of one atmospheric pressure into the vacuum heating device, the alloy therein was cooled down to the room temperature to carry out hydrogenation and activation thereof. The hydrogenated alloy so obtained was again pulverized into fine powder of less than 38 $\mu$m (400 mesh). The fine powder of the hydrogen-occlusion alloy obtained through the above process was formed under the pressure of$\approx$ 5000 bar (5 t/cm$^2$) into circular pellets, each measuring 1 cm in diameter, and then they were sintered at 900°C in a vacuum condition. A lead wire was then attached thereto to obtain a hydrogen-occlusion alloy electrode. The hydrogen-occlusion alloy contained in the electrode was 1 gram in weight. In the manner as described above, various electrodes consisting of various hydrogen-occlusion alloys made to different specifications with respect to the composition ratio as shown on Table 1 and discussed hereinafter were prepared. Using as a working pole each of these hydrogen-occlusion alloy electrodes in combination with a nickel plate electrode serving as a counter pole and 30 wt.% water solution of potassium hydroxide as the alkaline electrolyte, open type test cells were prepared. A discharge test was carried out with each of these test cells. The results of the discharge tests with them are as shown on Table 1. The charging to each of the test cells was carried out with the charge current having a current density of 6 mA/cm$^2$ until the charge amount thereof reached 130% of the electrochemical hydrogen occlusion amount of each of said hydrogen-occlusion alloy electrodes, and the discharging was carried out with the discharge current having a current density of 10 mA/cm$^2$ until the voltage was dropped to - 0.75 V vs. Hg/HgO. This charge-discharge operation for each test cell was repeated until the discharge capacity thereof became stable, and then the capacity thereof in this stable condition was measured.

2

EP 0 484 964 A1

TABLE 1

| CELL NO. | HYDROGEN-OCCLUSION ALLOY | c/g | DISCHARGE CAPACITY (mAh/g) |
|---|---|---|---|
| 1 | $Zr(V_{0.33}Ni_{0.67})_2$ | 1069 | 297 |
| 2 | $Zr(V_{0.33}Ni_{0.67})_{2.4}$ | 1123 | 312 |
| 3 | $Zr(V_{0.33}Ni_{0.59}Co_{0.08})_{2.4}$ | 1174 | 326 |
| 4 | $Zr(V_{0.33}Ni_{0.50}Co_{0.17})_{2.4}$ | 1181 | 328 |
| 5 | $Zr(V_{0.37}Ni_{0.55}Co_{0.08})_{2.4}$ | 1141 | 317 |
| 6 | $Zr(V_{0.29}Ni_{0.63}Co_{0.08})_{2.4}$ | 1127 | 313 |
| 7 | $Zr(V_{0.33}Ni_{0.59}Fe_{0.08})_{2.4}$ | 1195 | 332 |
| 8 | $Zr(V_{0.33}Ni_{0.59}Mn_{0.08})_{2.4}$ | 1307 | 363 |
| 9 | $Zr(V_{0.33}Ni_{0.50}Mn_{0.17})_{2.4}$ | 1318 | 366 |
| 10 | $Zr(V_{0.33}Ni_{0.52}Mn_{0.15})_{2.7}$ | 1188 | 330 |
| 11 | $Zr(V_{0.33}Ni_{0.42}Co_{0.17}Mn_{0.08})_{2.4}$ | 1256 | 349 |
| 12 | $Zr_{0.9}Ti_{0.1}(V_{0.33}Ni_{0.42}Co_{0.25})_2$ | 1260 | 350 |
| 13 | $Zr_{0.9}Ti_{0.1}(V_{0.33}Ni_{0.59}Co_{0.08})_{2.4}$ | 1130 | 314 |
| 14 | $Zr_{0.9}Ti_{0.1}(V_{0.33}Ni_{0.51}Co_{0.08}Mn_{0.08})_{2.4}$ | 1267 | 352 |
| 15 | $Zr_{0.9}Ti_{0.1}(V_{0.33}Ni_{0.42}Co_{0.08}Mn_{0.17})_{2.4}$ | 1364 | 379 |
| 16 | $Zr_{0.7}Ti_{0.3}(V_{0.33}Ni_{0.33}Co_{0.08}Mn_{0.26})_{2.4}$ | 1375 | 382 |
| 17 | $Zr_{0.5}Ti_{0.5}(V_{0.375}Ni_{0.40}Fe_{0.125}Mn_{0.10})_2$ | 1451 | 403 |
| 18 | $Zr_{0.9}Ti_{0.1}(V_{0.33}Ni_{0.43}Co_{0.08}Fe_{0.08}Mn_{0.08})_{2.4}$ | 1368 | 380 |
| 19 | $Zr_{0.3}Ti_{0.7}(V_{0.33}Ni_{0.50}Co_{0.17})_{2.4}$ | 1145 | 318 |
| 20 | $Zr(V_{0.33}Ni_{0.27}Co_{0.40})_{2.4}$ | 1134 | 315 |
| 21 | $Zr_{0.9}Ti_{0.1}(V_{0.33}Ni_{0.27}Co_{0.40})_{2.4}$ | 1156 | 321 |
| 22 | $Zr(V_{0.33}Ni_{0.27}Mn_{0.40})_{2.4}$ | 1127 | 313 |
| 23 | $Zr(V_{0.33}Ni_{0.52}Mn_{0.15})_3$ | 1152 | 320 |
| 24 | $Zr(V_{0.33}Ni_{0.50}Co_{0.17})_3$ | 1145 | 318 |
| 25 | $Zr_{0.2}Ti_{0.8}(V_{0.33}Ni_{0.50}Co_{0.17})_{2.4}$ | 907 | 252 |
| 26 | $Zr(V_{0.40}Ni_{0.52}Co_{0.08})_{2.4}$ | 1087 | 302 |
| 27 | $Zr(V_{0.28}Ni_{0.64}Co_{0.08})_{2.4}$ | 875 | 243 |
| 28 | $Zr(V_{0.33}Ni_{0.17}Co_{0.50})_{2.4}$ | 1033 | 287 |
| 29 | $Zr(V_{0.33}Ni_{0.50}Co_{0.17})_{1.5}$ | 590 | 164 |
| 30 | $Zr(V_{0.33}Ni_{0.50}Co_{0.17})_{3.5}$ | 652 | 181 |

As clearly seen from Table 1, each and every one of the test cells (Cell Nos. 3 to 24) using one of the hydrogen-occlusion alloy electrodes according to the present invention showed better performance including a higher discharge capacity as compared with any of the test cells (Nos. 1 and 2) employing one of the conventional hydrogen-occlusion alloy electrodes. In contrast thereto, the test cell (Cell No. 25) in which the hydrogen-occlusion alloy electrode containing most Ti was used showed a smaller discharge capacity than

3

either one of the test cells (Cell Nos. 1 and 2) that used one of the conventional hydrogen-occlusion alloy electrodes, thus indicating that substitution of zirconium by titanium has to be within the range of $0 \leq a \leq 0.7$. Further, taking up as standard the ratio of 1 to 2 for the quantity of vanadium (V) against the sum total of nickel (Ni) and a metal or metals A (at least one element of Fe, Co and Mn) substituting part of the Ni content, the inventor conducted investigations as to how far the composition ratio of the alloy might be allowed to deviate from that standard while still preserving the crystal structure of the alloy. As a result, it has been found as preferable to have the quantitative deviation X of vanadium from the standard kept within the range of $-0.05 < X < 0.07$; when the quantity of vanadium $(0.33 + X)$ is 0.28 meaning the value of X is $-0.05$ or smaller (Cell No. 27) or said quantity is 0.40 meaning the value of X is 0.07 or greater (Cell No. 26), the discharge capacity decreased with either one of them. Next, further investigations were carried out to examine the quantity b of the metal A substituting part of nickel content. As a result, it has been revealed that the discharge capacity drops with the value of b increased up to 0.5 exceeding 0.4 (as in the case of the test cell, Cell No. 28) and it is more suitable to keep it within the range of $0 < b \leq 0.4$. In addition, the value of c has to be within the range of $0 \leq c \leq 1$ for preserving the crystal structure, and should it get out of this range (as with the test cells, Cell Nos. 29 and 30), there takes place a decrease in the discharge capacity.

Cobalt, iron and manganese may be used as the metal A substituting part of nickel. One element, or a combination of two or more of these metals can be used as such, and in either case, there was obtained a high discharge capacity.

With a cylindrical, sealed type nickel-hydrogen cell so prepared to have an electrode made of the alloy according to the present invention used as the negative electrode, a publicly known sintered type nickel electrode used as the positive electrode and 30% water solution of potassium hydroxide as the electrolyte, the virtually equally good performance was obtained as well. Although sintered type hydrogen-occlusion alloy electrodes were used in the foregoing embodying examples, there may be used any other type ones such as a paste type one made by mixing and kneading fine powder of hydrogen-occlusion alloy with a bonding agent into a paste thereof, and then applying the paste to a collector or carrier so that the paste is filled therein and coated thereon.

As described in the foregoing, a hydrogen-occlusion alloy electrode according to the present invention consists of a hydrogen-occlusion alloy whose composition is expressed by a general formula of $Zr_{1-a} Ti_a - (V_{0.33+x} Ni_{0.67-x-b} A_b)_{2+c}$, wherein A represents at least one kind of element selected from among Fe, Co and Mn, $0 \leq a \leq 0.7$, $-0.05 < X < 0.07$, $0 < b \leq 0.4$, and $0 \leq c \leq 1$; or a hydride of said alloy, so that the electrode provides a higher discharge capacity, this being one of the effects of the present invention.

## Claims

1. A hydrogen-occlusion alloy electrode, characterized in that it consists of an alloy whose composition is expressed by a general formula of

   $$Zr_{1-a} Ti_a (V_{0.33+x} Ni_{0.67-x-b} A_b)_{2+c},$$

   wherein
   A represents at least one kind of element selected from among Fe, Co and Mn,
   $0 \leq a \leq 0.7$
   $-0.05 < X < 0.07$,
   $0 < b \leq 0.4$, and
   $0 \leq c \leq 1$.

2. A hydrogen-occlusion alloy electrode, characterized in that it consists of a hydride of the alloy defined in claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 293 660 (MATSUSHITA ELECTRIC INDUSTRIAL) <br> * page 6, line 1 - line 20; claims 6,7 * <br> * example 4 * <br> --- | 1,2 | H01M4/38 |
| A | FR-A-2 623 271 (KHUOCHIH HONG) <br> * page 5, line 30 - page 6, line 7 * <br> --- | 1,2 | |
| P,X | EP-A-0 440 015 (FURAWA DENCHI KABUSHIKI KAISHA) <br> * claim 1; tables 1,NR,3,8,10 * <br> --- | 1,2 | |
| A | CHEMICAL ABSTRACTS, vol. 114, no. 6, <br> 11 February 1991, Columbus, Ohio, US; <br> abstract no. 46583T, <br> HONG GUOXIU: 'Hydrogen - storage materials for battery' <br> page 217 ; column 2 ; <br> & CN - A - 1043409 ( HONG GUOXIU ) (27-06-1990) <br> * abstract * <br> ----- | 1,2 | |
| | | | **TECHNICAL FIELDS SEARCHED (Int. Cl.5 )** |
| | | | H01M |

The present search report has been drawn up for all claims

| Place of search | Date of completion of the search | Examiner |
|---|---|---|
| THE HAGUE | 25 FEBRUARY 1992 | D'HONDT J.W. |

EPO FORM 1503 03.82 (P04O1)